Europäisches Patentamt

European Patent Office

Office européen des brevets

(11) Veröffentlichungsnummer: **0 583 307 B1**

(12) **EUROPÄISCHE PATENTSCHRIFT**

(45) Veröffentlichungstag der Patentschrift: **21.12.94**

(51) Int. Cl.⁵: **B64G 1/24**

(21) Anmeldenummer: **92909609.7**

(22) Anmeldetag: **07.05.92**

(86) Internationale Anmeldenummer:
**PCT/EP92/00995**

(87) Internationale Veröffentlichungsnummer:
**WO 92/19498 (12.11.92 92/28)**

(54) **VORRICHTUNG ZUR LAGEREGELUNG VON SATELLITEN MIT SOLARDRUCKMOMENTEN.**

(30) Priorität: **07.05.91 DE 4114804**

(43) Veröffentlichungstag der Anmeldung:
**23.02.94 Patentblatt 94/08**

(45) Bekanntmachung des Hinweises auf die
Patenterteilung:
**21.12.94 Patentblatt 94/51**

(84) Benannte Vertragsstaaten:
**DE FR IT**

(56) Entgegenhaltungen:
**EP-A- 0 195 553      EP-A- 0 295 978**
**EP-A- 0 372 434      EP-A- 0 435 708**
**WO-A-92/09479      GB-A- 2 122 965**

(73) Patentinhaber: **Deutsche Aerospace AG**

**D-81663 München (DE)**

(72) Erfinder: **SURAUER, Michael**
**Lindenstr. 11**
**D-8224 Chieming (DE)**
Erfinder: **BITTNER, Helmut**
**Zirlerstr. 4**
**D-8000 München 70 (DE)**

EP 0 583 307 B1

**Beschreibung**

Die Erfindung bezieht sich auf ein Verfahren zur Lageregelung und Störmomentenkompensation mit Hilfe von Solardruckmomenten für Satelliten gemäß dem Oberbegriff des Patentanspruchs 1. Die missionsbedingte Sollorientierung solcher Satelliten - z.B. zur Erde - wird gestört durch Unsymmetrien in der Bauweise, durch Aufbauten auf dem Satelliten-Hauptkörper, wie Antennenreflektoren, aber auch durch Bautoleranzen, Schwerpunktswanderung während der Mission, Restmagnetismus und dergleichen in Wechselwirkung mit Umgebungsbedingungen, wie Gravitationskräften, Erdmagnetfeld und Solardruck. Bei Satelliten großer geometrischer Ausdehnung, die sich in großer Höhe über der Erdoberfläche befinden, wie beispielsweise Nachrichtensatelliten auf geosynchronen Umlaufbahnen, sind vor allem Störkräfte und Störmomente von ausschlaggebender Bedeutung, die vom Strahlungsdruck der Sonne herrühren.

Es wurde bereits auf verschiedene Weise versucht, die so entstehenden Störmomente durch Ausnutzung der sie ursprünglich verursachenden Solardruckkräfte wenigstens teilweise zu kompensieren. So ist z.B. seit langem bekannt, daß durch gegensinnige Verstellung der beiden symmetrisch zum Satelliten-Hauptkörper angeordneten Solargeneratoren ein sogenanntes "Windmühlenmoment" erzeugt werden kann, das um eine Achse wirkt, die mit der Schnittlinie der Sonneneinfallsebene mit der Ebene der Satellitenumlaufbahn zusammenfällt. Die Richtung eines so erzeugten Momentenvektors wandert im Erdbahnsystem bei ständiger Sonnenorientierung der Solargeneratoren infolge der Bewegung der Erde um die Sonne ca. um ein Grad pro Tag. Im rotierenden Achsensystem erdorientierter Satelliten, die sich pro Umlauf um die Erde um 360° um einer zur Bahnebene senkrechte Achse drehen, rotiert die Wirkungslinie dieses Windmühlenmoments dementsprechend zusätzlich mit der Umlaufperiode des Satelliten. Durch eine konstante, gegensinnige Verstellung der Solargeneratoren lassen sich auf einfache Weise solche durch Solardruck erzeugte Störeinflüsse kompensieren, deren Entstehung auf Unsymmetrien der Solargeneratoren selbst bezüglich ihrer Drehachse bzw. auf Abweichungen ihrer Orientierung von der Sollrichtung zurückzuführen sind, wie etwa Nullpunkts- und Positionierungsfehler der Solargeneratorantriebe oder Verwindungen der Generatorflächen Störmomente, die durch den Solardruck über Schwerpunktsablagen hervorgerufen werden, können mit den oben genannten Verstellmaßnahmen nur dann kompensiert werden, wenn der Schwerpunktsversatz senkrecht zur Umlaufebene d.h. in Richtung der Solargenerator-Drehachse liegt, und auch nur im zeitlichen Mittel über Teile der Umlaufperioden, nicht aber, wenn die Schwerpunktsverschiebung in der Umlaufebene liegt, was wegen der Anordnung der Treibstofftanks und ihrer Entleerung über die Missionsdauer normalerweise der Fall ist. Die Kompensation ist schon deshalb und zusätzlich wegen der Überlagerung anderer Störeinflüsse in der Praxis mit Schwierigkeiten und Unsicherheiten verbunden.

Für die Ausnutzung des Solardrucks zur Erzeugung von Stellmomenten für die Satellitenlageregelung und Störmomentenkompensation sind daher Einrichtungen und/oder Maßnahmen erforderlich die es gestatten Stellmomente zu erzeugen, die um mehrere, vorzugsweise zueinander orthogonale Raumachsen wirken und gleichzeitig und weitgehend unabhängig voneinander beeinflußbar und einstellbar sind.

So ist z.B. aus der US-A 4,325,124 ein Verfahren zur Regelung des Momentenvektors eines künstlichen Satelliten auf geostationärer Bahn der eingangs genannten Art bekannt, bei dem die Drehbewegung eines der beiden, symmetrisch am Satelliten angeordneten Solargeneratoren für eine bestimmte Zeitspanne angehalten und nach deren Ablauf um den gleichen Betrag über die nominale Sollorientierung hinaus nachgefahren wird, wenn die gemessene Rollablage des Satelliten einen bestimmten vorgegebenen Schwellwert überschreitet. Dadurch wird erreicht, daß im zeitlichen Mittel, d.h. über eine Periode solcher intervallweise symmetrisch zur Sonneneinfallsrichtung durchgeführter Schwenk- und Haltezyklen, einseitig die effektive dem Solardruck ausgesetzte Solargeneratorfläche verkleinert wird. Als Folge davon entsteht ein mittleres Solardruckmoment um eine in der Umlaufbahnebene liegende Raumachse, die zur Sonneneinfallsrichtung und damit auch zur Wirkungslinie des oben beschriebenen Windmühlenmomentes orthogonal ist. Dieses Verfahren wurde an dem ESA-Satelliten OTS 2 nach Beendigung seiner operationellen Missionszeit experimentell erprobt (ESA-Bulletin 31, Seite 75 - 79). Es erfordert zwar keinen zusätzlichen gerätetechnischen Aufwand gegenüber der Ausstattung herkömmlicher Satelliten, hat aber den Nachteil, daß gleichzeitig und unvermeidbar im Rhythmus der intervallwiser Nachlauf- und Vorlaufbewegung des betreffenden Solargenerators Windmühlenmomente erzeugt werden, die eine Beeinflussung der Satellitenbewegung um zwei Raumachsen unabhängig voneinander unmöglich machen. Dieser parasitäre Kopplungseffekt ist deshalb ganz erheblich, weil die angestrebte Momentenerzeugung um die Querachse dem Cosinus der Auslenkungsamplitude proportional ist, d.h. sich mit der Amplitude näherungsweise nur von zweiter Ordnung ändert und daher erst bei relative großen Auslenkungen wirksam wird. Das Windmühlenmoment dagegen ist proportional dem Sinus der Auslenkung und steigt daher in erster Näherung linear an. Darüber hinaus ist die mittlere Flächenverkleinerung des periodisch hin und her bewegten Solargeneratorflügels mit einem entsprechend hohen, unerwünschten Abfall der gewinnbaren elektrischen Leistung verbunden. Die Bereitstellung einer vorgegebenen elektrischen Leistung über die gesamte Missionsdauer von z.B. 10 Jahren und mehr in kommerziellen, geostationären Nachrichtensatelliten erfordert - bezogen auf den Beginn der Missionszeit - ohnehin eine Überdimensionierung der Solarzellenflächen um etwa 30 %, da sich der Wirkungsgrad der Solarenergieerzeugung infolge der jahreszeitlicher Schwankung des Sonneneinfallswinkels um ± 23,44° (Äquatorneigung gegenüber der Ekliptik), des Energieausfalls beim Durchgang durch den Erdschatten sowie von Alterungseffekten, der Verschmutzung der Generatoroberflächen durch kosmischen Staub und dergleichen beeinträchtigt wird. Dem zusätzlichen Leistungsabfall bei Anwendung des oben genannten Verfahrens muß daher durch eine entsprechende Vergrößerung der Solargeneratoren von vornherein Rechnung getragen werden, was Gewichtsnachteile mit sich bringt.

Die grundsätzlichen Verhältnisse der näherungsweise linearen bzw. quadratischen Abhängigkeit der so um zwei Raumachsen erzeugbaren Momente ändert sich auch dann nicht, wenn gemäß der EP-A2 0 372 424 (US-A 4,949,922) nicht nur ein Solargeneratorflügel, sondern beide gleichzeitig, jedoch verschieden weit periodisch gegenüber der nominalen Sonenorientierung verstellt werden. Zwar läßt sich damit der Einfluß der Verkopplung zwischen den Momenten um die Querachse und die Windmühlenachse etwas verringern, doch muß dies mit einer noch erheblich höheren Einbuße an gewinnbarer elektrischer Leistung erkauft werden, was eine weitere Vergrößerung der Solargeneratoren und entsprechende Gewichts- und Volumennachteile bei vorgegebenem Leistungsbedarf bedingt.

Das Problem der Erzeugung eines vom Windmühlenmoment unabhängig einstellbaren Solardruckmomentes um zwei zueinander orthogonale Achsen kann gemäß der EP-B1 0 101 333 gelost werden durch Anbringen zusätzlicher Sonnensegel, die unter festen Winkeln an den beiden Sonnengeneratoren angeordnet sind und ausschließlich der Stellmomentenerzeugung dienen Durch Zusatzflächen, die vorzugsweise an den Spitzen der Solargeneratoren antimetrisch zu ihren Drehachsen unter nahezu rechtem Winkel angebracht werden, wird bei gleichsinniger Verdrehung der beiden Sonnengeneratoren eines der beiden Sonnensegel stärker als das andere der Sonneneinstrahlung ausgesetzt, wodurch ein Moment um eine quer zur Sonneneinfallsrichtung in der Satellitenbahnebene gelegene Achse erzeugt wird, das in erster Näherung dem Drehwinkel und der Segelflache proportional ist Gemäß einer zweiten Ausführangsform dieser Erfindung werden am unteren Ende jedes Solargenerators d.h. nahe dem Satelliten-Hauptkörper,je zwei symmetrisch zu den Drehachsen gelegene, vorzugsweise einen Winkel von etwa 45° mit der Solargeneratoroberfläche bildende Sonnensegel angebracht, die bei gleichsinniger Verdrehung der Solargeneratoren aus ihrer Sonnenorientierung ein Moment um eine mit ihren Drehachsen zusammenfallende dritte Raumrichtung bewirken. Die Verwirklichung beider Maßnahmen in ein und demselben Satelliten verbietet sich jedoch, da sonst mit der gleichsinnigen Verdrehung der beider Solargeneratorflügel immer und ausschließlich auch vorzeichengleiche, also streng miteinander korrelierte Solardruckmomente um beide vorgenannten, zur Richtung der Windmühlenmomente orthogonalen Raumrichtungen erzeugt würden, was eine unabhängige Beeinflussung zum Zwecke der gezielten Lageregerung unmöglich macht. Wegen der relativ niedrigen Flächenkräfte des Solardrucks können die zusätzlichen Sonnensegel zwar in relativ leichter, gewichtssparender Bauweise ausgeführt werden, doch sind aus eben diesem Grund und wegen des spitzen Sonneneinfallswinkels zur Erzeugung nennenswerter Regelmomente große Zusatzflächen erforderlich, die letzlich doch einen Gewichtsnachteil bedingen, und deren Unterbringung und Entfaltung auch zusätzliche Komplexität und Inbetriebnahmerisiken mit sich bringen.

Aus der DE-02 33 29 955 ist ferner eine Lageregelung für Satelliten bekannt, bei der die dem Strahlungsdruck der Sonne ausgesetzten Solargeneratorflächen durch elastische Biege- und Torsionsverformung lageregelungsabhängig verändert werden können. Zu diesem Zwecke sind an den dem Satelliten abgewandten Ecken der Solargeneratoren Seile befestigt, die kreuzweise mit motorisch betätigten, an gegenüberliegenden Ecken des Satelliten-Hauptkörpers oder an Drehkreuzen angebrachten Seilwinden verbunden sind. Es ist offensichtlich, daß die Flächengeometrie solcher, aus mehreren Segmenten und Gelenken bestehender, mit Solarzellen belegter, in ihren Steifigkeitseigenschaften notwendigerweise inhomogener Solargeneratoren bei elastischer Biege- und eventuell gleichzeitiger Torsionsverformung quantitativ sehr schwer zu erfassen ist und die Lage des Druckpunktes der angreifenden Kräfte sowie die daraus resultierenden, auf den Satelliten wirkenden Momente hochgradig nichtlinear, stark verkoppelt und für einer gezielten Einsatz entsprechend schwierig zu beherrschen sind.

Die Aufgabe der vorliegenden Erfindung besteht nun darin, mit möglichst geringem zusätzlichem Aufwand ein verbessertes Verfahren zur wirksamen Ausnutzung des Solardrucks für die Lageregelang von Satelliten zu schaffen, das keinen nennenswerten Verlust an elektrischer Leistung infolge jahreszeitlicher Schwankung des Sonneneinfallswinkels oder infolge von Regelmanövern bewirkt, gleichzeitig eine wirkungsvolle Erzeugung von Regelmomenten um mindestens zwei Raumachsen unabhängig voneinander gestattet und darüber hinaus auch eine gezielte Beeinflussung der Momentenverhältnisse um eine dritte Raumachse ermöglicht. Diese Aufgabe wird gemäß der Erfindung durch die im kennzeichnenden Teil des Patentanspruches 1 aufgeführten Merkmale gelöst.

Zwar ist aus der EP-A-0 195 553 ein Raumfahrzeug bekannt, welches über zwei an gegenüberliegenden Seiten angebrachte Solargeneratoren verfügt, die nicht nur um zwei, sondern sogar am drei zueinander orthogonale Drehachsen unabhängig voneinander schwenkbar sind. Durch entsprechende Drehungen um zwei dieser Drehachsen kann erreicht werden daß die Solargeneratoren, sobald dies gewünscht ist, auf ihrer Erdumlaufbahn vollständig der Sonne zugekehrt werden, wobei dies einer Nominalorientierung entspricht, in der die Flächennormalen der Solargeneratoren direkt zur Sonne hin ausgerichtet sind. Diese Schwenkbarkeit der Solargeneratoren um mindestens eine erste sowie eine zweite Drehachse wird jedoch nicht dazu ausgenützt, eine Lageregelung des Raumfahrzeuges mit Hilfe von Solardruckmomenten zu bewerkstelligen. Vielmehr wird die Lageregelung bei diesem bekannten Raumfahrzeug auf von den Solargeneratorbewegungen vollkommen autonome und herkömmliche Weise durchgeführt.

Bei vielen dreiachsenstabilisierten Satelliten wird die Entfaltung der Solargeneratoren mittels vorgespannter Federn über Seile und Umlenkrollen bewerkstelligt. Es sind jedoch auch schon Mechanismen bekannt geworden, bei denen die Entfaltung mit Hilfe motorischer Antriebe vorgenommen wird, die im untersten, dem Satelliten-Hauptkörper nächstgelegenen Gelenk jedes Solargenerators angeordnet sind. Solche bereits flugerprobte Entfalt-Antriebe der letztgenannten Art, bestehend aus redundanten Motor-Getriebe-Einheiten, die aus jeweils einem der ebenfalls redundanten Stromversorgungssysteme gespeist werden, sind z.B. in den Satelliten der EUTELSAT-2-Serie eingebaut. Vor allem Mechanismen der letztgenannten Art lassen sich ohne größeren Zusatzaufwand zur Realisierung einer signalgesteuerten Solargeneratorverstellung um die erwähnten zweiten Drehachsen gemäß der vorliegenden Erfindung ausbauen. z.B. durch Anbringen einer Positionsruckmeldung und Weglassen der Arretierung in der Endposition. Zum besseren Verständnis sollen die wesentlichen Merkmale der Erfindung nachfolgend anhand von Abbildungen näher erläutert und die Einsatzmöglichkeiten für die Zwecke der Satellitenlageregelung bzw. Störmomentenkompensation mit Hilfe der physikalischen Gesetzmäßigkeiten bei Winkelbewegungen der Solargeneratoren um zwei Drehachsen gegenüber der Sonneneinfallsrichtung diskutiert werden. Es zeigen in schematischer Darstellung:

Figur 1 - einen Satelliten konventioneller Art auf einer geostationären Umlaufbahn,

Figur 2 - eine vereinfachte Darstellung eines konventionellen Satelliten zur Definition von Koordinatensystemen.

Figur 3 - einen Satelliten mit Solargeneratoren, die gemäß der Erfindung um jeweils zwei zueinander orthogonale Drehachsen verstellbar sind,

Figur 4 - ein Vektordiagramm zur Ermittlung der durch Solardruck über Schwerpunktsablagen hervorgerufenen Störmomente,

Figur 5 - ein Blockschaltbild eines Lageregelungssystems unter Anwendung der Erfindung.

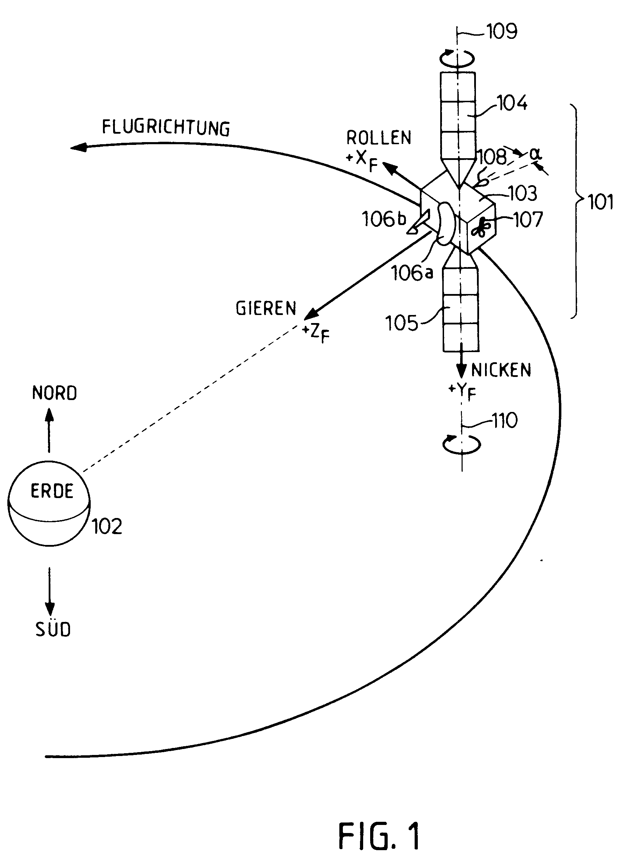

Figur 1 zeigt, stark vereinfacht, die typische geometrische Konfiguration dreiachsenstabilisierter Satelliten auf einer äquatorialen Umlaufbahn um die Erde 102. Der Satellit 101 besteht aus einem würfelförmigen Zentralkörper 103, in dem großflächige, im allgemeinen entfaltbare Solargeneratoren 104, 105 um erste, zur Bahnebene orthogonale Drehachsen 109, 110 drehbar gelagert sind, und der eine oder mehrere, auf die Erde ausgerichtete Antennen 106a und Speisesysteme 106b trägt, deren Strahlungsrichtung mit Hilfe des Regelungssystems des Satelliten innerhalb vorgegebener, enger Grenzen gehalten werden soll. Dem Satelliten 101 istein Achsensystem $X_F$ (Rollachse), $Y_F$ (Nickachse), $Z_F$ (Gierachse) so zugeordnet, daß bei idealer Funktion des Regelungssystems die Rollachse in die augenblickliche Flugrichtung, die Gierachse auf den Erdmittelpunkt und die Nickachse in Richtung der Bahnnormalen zeigt. Zur Erzeugung von äußeren und/oder inneren Regelmomenten um diese Achsen werden üblicherweise, je nach Ausführungsform und operationeller Betriebsphase, verschiedenartige Stellglieder wie Reaktionsdüsen 107, 108 bzw. in Fig. 1 nicht eigens gezeigte magnetische Momentengeber oder Drallspeichereinrichtungen wie Drallräder und Reaktionsräder eingeselzt.

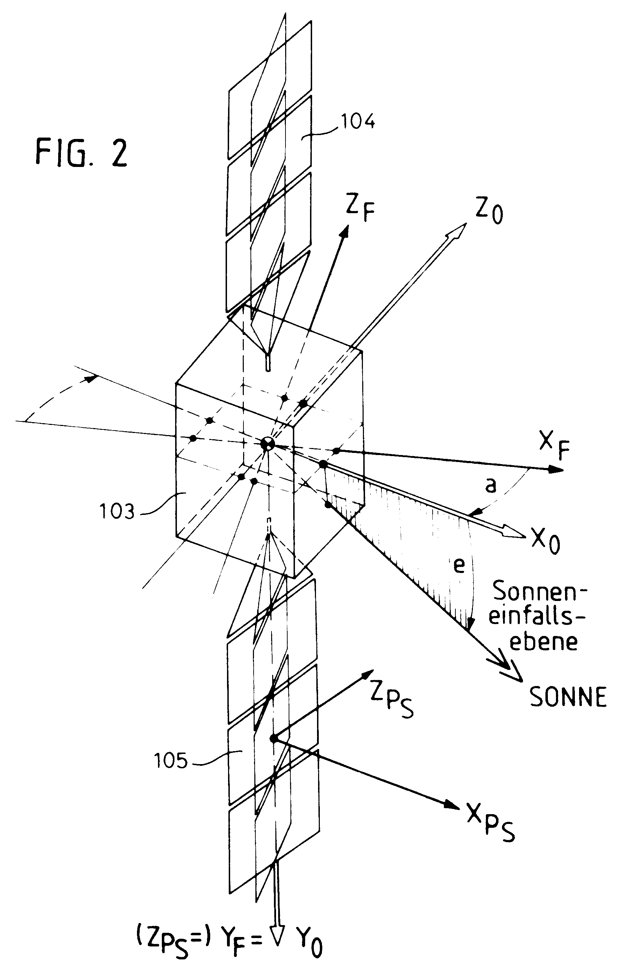

Mit der schematischen Darstellung eines Satelliten nach Fig. 2 wird ein zusätzliches Koordinatensystem mit den Achsen $X_0$, $Y_0$, $Z_0$ definiert, das sich auf die Sollorientierung der Solargeneratoren konventioneller Satelliten in Richtung der Sonneneinfallsebene Bezieht und gegenüber dem satellitenfesten (Index "F"), erdorientierten Achsensystem um den Sonnenazimutwinkel "a" in der Bahnebene verdreht ist. Das Vorzeichen des Drehwinkels (a) sei so gewählt, daß das satellitenfeste Achsensystem ($X_F$, $Y_F$, $Z_F$) bei positiver Drehung (um die $Y_F$ = $Y_0$ - Achse) in das quasi raumfeste, in Richtung der Sonneneinfallsebene orientierte Achsensystem ($X_0$, $Y_0$, $Z_0$) übergeht.

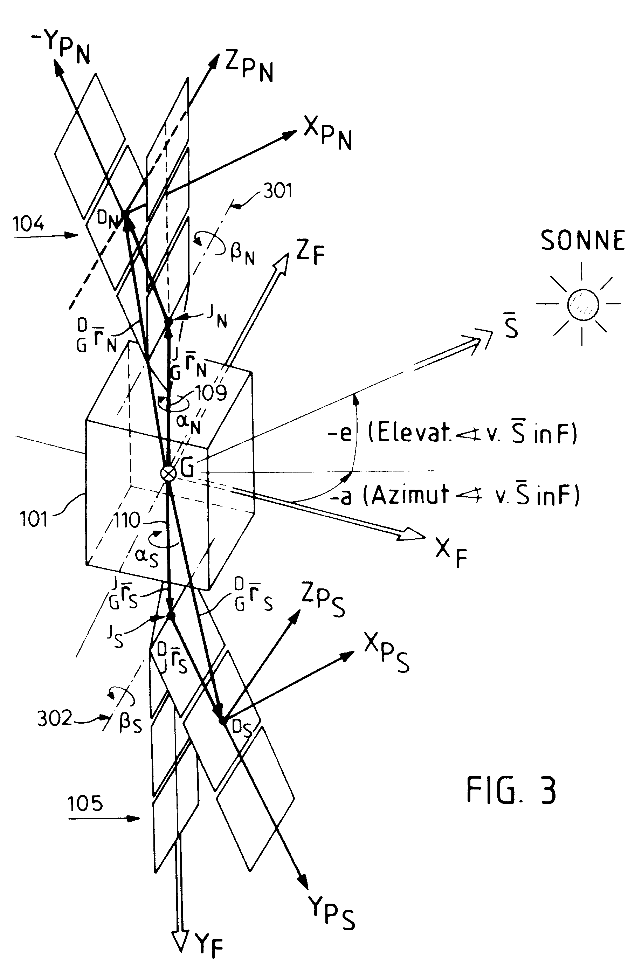

Figur 3 zeigt einen Satelliten, bei dem im Sinne der vorliegenden Erfindung jeder Solargenerator zusätzlich zur konventionellen Verstellmöglichkeit um eine erste, mit der Fahrzeug-$Y_F$-Achse zusammenfallende (109, 110) auch noch um eine zu dieser vorzugsweise orthogonal angeordnete, zweite Drehachse 301, 302 mittels motorischer Antriebe verstellbar sein soll. In diesem bevorzugten Ausführungsbeispiel

4

fallen die vorgenannten zweiten Drehachsen zusammen mit den Verbindungsgelenken zwischen den als "Joch" bezeichneten Verbindungsstücken zwischen den konventionellen Solargeneratorantrieben und den mit Solarzellen belegten, im allgemeinen aus mehreren, während der Startphase zusammengefalteten Sektionen bestehenden Solargeneratoren. In diesen Gelenken sind bisher auch die Antriebe für die bereits erwähnten, zur Realisierung der vorliegenden Erfindung besonders geeigneten, motorisch betätigten Entfaltmechanismen untergebracht jedem der beiden, bei Satelliten in äquatorialen Umlaufbahnen nordseitig (Index "N") und südseitig (Index "S") angeordneten Solargeneratoren (Index "P" wie englisch "Panel") ist ein weiteres Koordinatensystem zugeordnet, dessen Achsen mit $X_{PN}$, $Y_{PN}$, $Z_{PN}$ bzw. $X_{PS}$, $Y_{PS}$, $Z_{PS}$ bezeichnet sind Vereinbarungsgemäß sollen die $X_P$-Achsen immer in Richtung der Flächennormalen der aktiven Solargeneratorflächen zeigen und die $Z_P$-Achsen parallel zu den zweiten Drehachsen liegen. Unter Bezug auf die Figur 3 bezeichnen ferner

G den Satellitenschwerpunkt,

$\alpha_N/\alpha_S$ den Drehwinkel des nord- bzw. südseitigen Solargenerators (Panels) um die jeweils erste Drehachse 109, 110, wobei bei erdorientierten Satelliten gilt: $0 \leq \alpha_P \leq 360°$,

$\beta_N/\beta_S$ den Drehwinkel des nord- bzw. südseitigen Solargenerators um die jeweils zweite Drehachse 301, 302, mit $|\beta| \leq 23{,}44°$ bei geostationären Satelliten,

$D_N/D_S$ den Angriffspunkt der Resultierenden der auf den nord- bzw. südseitigen Solargenerator wirkenden Solardruckkräfte (Solarpunkt),

$J_N/J_S$ den Schnittpunkt der erstem und zweiten Drehachsen des nord- bzw. südseitigen Solargenerators,

${}^D_G\bar{r}_N/{}^D_G\bar{r}_S$ den Vektor vom Satellitenschwerpunkt zum Solardruckpunkt des nord- bzw. südseitigen Solargenerators.

${}^D_J\bar{r}_N/{}^D_J\bar{r}_S$ den Vektor vom Drehachsenschnittpunkt $J_N/J_S$ zum jeweiligen Solardruckpunkt $D_N/D_S$,

${}^J_G\bar{r}_N/{}^J_G\bar{r}_S$ den Vektor vom Satellitenschwerpunkt zum jeweiligen Drehachsenschnittpunkt $J_N/J_S$,

a,e Azimut- und Elevationswinkel der Sonne in Satellitenachsen ($X_F$, $X_F$, $Z_F$).

Aus der einschlägigen Fachliteratur (z.B. J.R. Wertz: "Spacecraft Attitude Determination and Control, Seite 570 ff.) ist bekannt, daß sich die Summe (Resultierende) der auf eine ebene Fläche mit homogenen Oberflächeneigenschaften der Größe A durch Solarstrahlung wirkenden Kräfte durch einen im Flächenmittelpunkt angreifenden Kraftvektor der Form:

$$\bar{f} = -P \cdot A \cdot (1-C_s)(\bar{n}^T \cdot \bar{s}) \cdot \bar{s} - 2 \cdot P \cdot A \cdot [C_s \cdot (\bar{n}^T \cdot \bar{s})^2 + (1/3)C_d(\bar{n}^T \cdot \bar{s})] \cdot \bar{n} \qquad (1.1)$$

oder vereinfacht:

$$\bar{f} = k_1 \cdot \bar{s} + k_2\{(\bar{n}^T \cdot \bar{s})\} \cdot \bar{n} \qquad (1.2)$$

darstellen läßt, wobei bedeuten:

$$k_1 = -PA(1-C_s)(\bar{n}^T \cdot \bar{s}) \qquad (1.3)$$

$$k_2 = -2PA \cdot [C_s \cdot (\bar{n}^T \cdot \bar{s})^2 + (1/3)C_d \cdot (\bar{n}^T \cdot \bar{s})] \qquad (1.4)$$

| | |
|---|---|
| P | den Solardruck ($4{,}5 \cdot 10^{-6}$ $N/m^2$ in der Umgebung der Erde), |
| A | die Gesamtfläche eines Solargenerators, |
| $C_s$, $C_d$ | Reflexionskoeffizienten, abhängig von Oberflächeneigenschaften, |
| $\bar{n}$, $\bar{s}$ | Einheitsvektoren in Richtung der Flächennormalen ($\bar{n}$) bzw. der Sonneneinfallsrichtung ($\bar{s}$), |
| $(\bar{n}^T \cdot \bar{s})$ | das Skalarprodukt zwischen den oben genannten Einneitsvektoren, und wobei |
| $k_2 = k_2\{(\bar{n}^T \cdot \bar{s})\}$ | die funktionale Abhängigkeit der Größe $k_2$ vom Skalarprodukt ausdrücken soll. |

Gemäß einem wesentlichen Merkmal der vorliegenden Erfindung sollen nun im Nominalfall die Flächennormalen der Solargeneratoren zu jedem Zeitpunkt, d.h. in Jeder Position des Satelliten auf seiner Umlaufbahn und zu jeder Jahreszeit, Immer zur Sonne ausgerichtet werden. Dies ist bei Kenntnis der Bahnparameter eines Satelliten auch dann ohne weiteres möglich, wenn die Umlaufbahn nicht kreisförmig und in der Äquatorebene verläuft, d.h. wenn es sich nicht - wie im vorliegenden Beispiel - um geostationäre, sondern um beliebige Anwendungssatelliten wie Erdbeobachtungs- und wissenschaftliche Satelliten auf geneigten Bahnen und mit anderen Umlaufzeiten handelt. Natürlich müssen die Bewegungsfreiheitsgrade der Solargeneratoren um die zweiten Drehachsen auf die Missionsanforderungen, d.h. die Art der Umlaufbahn, insbesondere ihre Neigung gegenüber der Ekliptik, abgestimmt sein.

In diesem Fall ist das oben genante Skalarprodukt $(\bar{n}^T \cdot \bar{s})$, das ja dem Cosinus des eingeschlossenen Winkels entspricht, bei kleinen Bewegungen der Solargeneratoren um ihre Sollorientierung in erster Näherung gleich 1, und die Größe $k_2$ kann als konstanter, skalarer Faktor behandelt werden.

Durch Beaufschlagung der Stellmotoren für die Bewegung der z.B. nord- (Index "N") und südseitig (Index "S") angeordneten Solargeneratoren um die ersten Drehachsen 109, 110 mit Signalen der Form

$$\alpha_N(t) = \alpha_0(t) + \gamma_N(t) \qquad (2.1a)$$

$$\alpha_S(t) = \alpha_0(t) + \gamma_S(t) \qquad (2.1b)$$

bzw. für die Bewegung um die zweiten Drehachsen 301, 302 mit Signalen der Form

$$\beta_N(t) = \beta_0(t) + \epsilon_N(t) \qquad (2.2a)$$

$$\beta_S(t) = \beta_0(t) + \epsilon_S(t) \qquad (2.2b)$$

wird sichergestellt, daß die Flächennormalen nominal, d.h. im ungestörten Fall, nicht nur, wie bei konventionellen Satelliten, in Richtung der Sonneneinfallsebene ($X_0 Y_0$-Ebene in Fig. 2), sondern direkt in Sonnenrichtung (Einheitsvektor "$\bar{s}$") zeigen. Dieser, mit $\alpha_0$, $\beta_0$ bezeichneten Nominalorientierang sollen erfindungsgemäß zusätzliche, der Erzeugung von Solardruck- bzw. Regelmomenten dienende Signale $\gamma_N$, $\gamma_S$, $\epsilon_N$, $\epsilon_S$ überlagert werden. Gemaß Fig. 3 wird die Sollorientierung sichergestellt durch die Bedingung

$$\alpha_0 = a \qquad (2.3a)$$

$$\beta_0 = e \qquad (2.3b)$$

Wegen der großen, dem Solardruck direkt ausgesetzten Flächen genügen bereits kleine Regelbewegungen ($\gamma$, $\epsilon$) der Solargeneratoren um ihre Sollorientierung ($\alpha_0$, $\beta_0$) zur Erzeugung ausreichender Regelmomente, so daß im Anwendungsfall zur Beschreibung der Gesetzmäßigkeiten weitgehend mit Näherungen erster Ordnung gearbeitet werden kann und auch keine merkliche Schwankung der Solarenergieerzeugung damit verbunden ist.

Unter Verwendung der Bezeichnungen nach Fig. 3, der Definitionsgleichungen (2.1) - (2.3) und der Annahme symmetrischer Konfiguration lassen sich die auf den Satelliten wirkenden Momente ($T_{0X}$, $T_{0Y}$, $T_{0Z}$) in dem zur Sonneneinfallsebene ausgerichteten Achsensystem ($X_0$, $Y_0$, $Z_0$) allgemein wie folgt ausdrücken:

$$T_{0X} = \frac{D}{J} r k_1 \{ s^2\beta_0 (s\gamma_N c\epsilon_N - s\gamma_S c\epsilon_S) + s\beta_0 c\beta_0 (s\gamma_N s\epsilon_N - s\gamma_S s\epsilon_S) \}$$
$$+ k_2 \{ \frac{D}{J} r (s\gamma_N - s\gamma_S) + \frac{J}{G} r [ c\beta_0 (s\gamma_N c\epsilon_N - s\gamma_S c\epsilon_S) - s\beta_0 (s\gamma_N s\epsilon_N - s\gamma_S s\epsilon_S) ] \} \qquad (3.1)$$

$$T_{0Z} = \frac{D}{J} r k_1 \{ s^2\beta_0 (c\gamma_N c\epsilon_N - c\gamma_S c\epsilon_S) - s\beta_0 c\beta_0 [ s\epsilon_N (1 - c\gamma_N) - s\epsilon_S (1 - c\gamma_S) ] + c^2\beta_0 (c\epsilon_N - c\epsilon_S) \}$$
$$+ k_2 \{ \frac{D}{J} r (c\gamma_N - c\gamma_S) + \frac{J}{G} r [ c\beta_0 (c\gamma_N c\epsilon_N - c\gamma_S c\epsilon_S) - s\beta_0 (c\gamma_N s\epsilon_N - c\gamma_S s\epsilon_S) ] \} \qquad (3.2)$$

$$T_{0Y} = -\frac{D}{J} r k_1 [ s\beta_0 c\beta_0 (s\gamma_N c\epsilon_N - s\gamma_S c\epsilon_S) + c^2\beta_0 (s\gamma_N s\epsilon_N - s\gamma_S s\epsilon_S) ] \equiv T_{FY} \qquad (3.3)$$

In abgekürzter Schreibweise wurden in den Gleichungen (3.1) - (3.3) die trigonometrischen Funktionen sin, cos durch ihre Anfangsbuchstaben "s" bzw. "c" ersetzt. Für die als symmetrisch angenommenen Konfigurationen wurden ferner folgende, vereinfachende Bezeichnungen eingeführt:

$$\left| {}_G^J \bar{r}_S \right| = \left| -{}_G^J \bar{r}_N \right| = {}_G^J r$$

$$(3.4)$$

$$\left| {}_J^D \bar{r}_S \right| = \left| -{}_J^D \bar{r}_N \right| = {}_J^D r$$

Die Darstellung der Momente $(T_{FX}, T_{FY}, T_{FZ})$ im satellitenfesten Koordinatensystem $(X_F, Y_F, Z_F)$, das um die zur Bahnebene orthogonale Achse $(Y_F = Y_0)$ mit der Umlaufgeschwindigkeit des Satelliten $(\omega_0)$ rotiert, gemäß

$$\alpha_0 = -\omega_0 \cdot t$$
$(\omega_0 = 7{,}27 \cdot 10^{-5}$ rad/sec bei geostationären Satelliten)

erhält man durch die Transformation:

$$
\begin{bmatrix} T_{FX} \\ T_{FY} \\ T_{FZ} \end{bmatrix}
=
\begin{bmatrix} c\alpha_0 & 0 & s\alpha_0 \\ 0 & 1 & 0 \\ -s\alpha_0 & 0 & c\alpha_0 \end{bmatrix}
\begin{bmatrix} T_{0X} \\ T_{0Y} \\ T_{0Z} \end{bmatrix}
=
\begin{bmatrix} T_{0X}c\alpha_0 + T_{0Z}s\alpha_0 \\ T_{0Y} \\ -T_{0X}s\alpha_0 + T_{0Z}c\alpha_0 \end{bmatrix}
\qquad (4)
$$

Mit Hilfe der obigen, für die vorliegende Erfindung ohne Einschränkungen gültigen physikalischen Gesetzmäßigkeiten sollen nun anhand von einigen Spezialfällen die vielfältigen Eingriffsmöglichkeiten $(\gamma, \epsilon)$ zur Erzeugung von Solardruck- bzw. Stellmomenten aufgezeigt werden.

Im ersten Spezialfall wird zunächst die Wirkung der bereits wiederholt erwähnten Windmühlenmomente betrachtet, die durch gegensinnige Verstellung der beiden Solargeneratoren um die konventionellen ersten Drehachsen 109, 110 um betragsgleiche Winkel erzeugt werden. Bei zusätzlicher gleichsinniger Verstellung der Solargeneratoren um ebenfalls betragsgleiche Werte um die zweiten Drehachsen 301, 302 entsprechend den Bedingungen

$$\gamma_N = \gamma_S = \gamma_1$$
$$\epsilon_N = \epsilon_S = \epsilon \qquad (5.1a)$$

ergeben sich aus den vorgenannten Gleichungen folgende Relationen:

$$T_{0X} = 2s\gamma_1\{{}_J^D r[k_2 + k_1 s\beta_0 s(\beta_0 + \epsilon)] + {}_G^J rk_2 c(\beta_0 + \epsilon)\}$$

$$T_{0Z} \equiv 0 \qquad (5.1b)$$

$$T_{0Y} = -2s\gamma_1 k_1 {}_J^D rc\beta_0 s(\beta_0 + \epsilon)$$

Das Windmühlenmoment wirkt demnach im vorliegenden Fall um zwei Achsen $(X_0, Y_0)$ gleichzeitig, wobei die Komponente um die zur Bahnebene orthogonale Achse $(Y_0)$ im Unterschied zur klassischen Konfiguration wegen der anderen Orientierung der Flächennormalen vom Elevationswinkel der Sonne abhängt. Größe und Vorzeichen des letzgenannten Anteils können jedoch durch Steuerung der Solargeneratorbewegung um die zweiten Drehachsen (Gleichungen 2.2) zusätzlich, allerdings nur zu Lasten der gewinnbaren elektrischen Energie beeinflußt werden. Insbesondere verschwindet dieser Momentenanteil für $\epsilon = -\beta_0$, was der klassischen Orientierung der Solargeneratoren senkrecht zur Bahnebene entspricht, oder das Moment wirkt in umgekehrter Richtung, wenn der Verstellwinkel $(\epsilon)$ betragsmäßig größer als der Elevationswinkel der Sonne $(\beta_0 = e)$ und diesem entgegengesetzt gerichtet ist.

Bei anderen Einstellungen der Solargeneratorausrichtung um die zweiten Drehachsen, z.B. durch die

Kombination

$$\gamma_N = -\gamma_S = \gamma_1$$
$$\epsilon_N = -\epsilon_S = \epsilon_1 \qquad (5.1c)$$

oder $|\epsilon_N| \neq |\epsilon_S|$ entstehen Solardruckmomente um alle drei Bezugsachsen ($X_0$, $Y_0$, $Z_0$), deren Größe und Vorzeichen ohne weiteres aus den allgemeinen Gleichungen (3.1) - (3.3) ableitbar, jedoch nicht mehr so einfach überschaubar ist.

Ein zweiter, einfacher Spezialfall ergibt sich für die Kombination von symmetrischen, gleichsinnigen Verstellungen um die ersten Drehachsen (Gleichung 2.1) mit gleich- und gegensinnigen Verstellungen am die zweiter Drehachsen (Gleichung 2.2). Der erstgenannte Fall mit

$$\gamma_N = \gamma_S = \gamma$$
$$\epsilon_N = \epsilon_S = \epsilon \qquad (5.2a)$$

ebenso wie der noch speziellere Fall überhaupt keiner Abweichung gegenüber der Sonnenrichtung ($\gamma = \epsilon = 0$) stellt den Trivialfall identisch verschwindender Momente um alle Bezugsachsen ($X_0$, $Y_0$, $Z_0$) dar, der durch die Gleichungen zwar bestätigt wird, aber keine besondere Beachtung verdient. Dagegen ergeben sich für den Fall gegensinniger Verstellungen um die zweiten Drehachsen entsprechend

$$\gamma_N = \gamma_S = \gamma$$
$$\epsilon_N = -\epsilon_S = \epsilon_1 \qquad (5.2b)$$

die Beziehungen

$$T_{0X} = 2s\gamma s\epsilon_1 [s\beta_0 ( {}^D_J rk_1 c\beta_0 - {}^J_G rk_2 )]$$

$$T_{0Z} = -2s\epsilon_1 s\beta_0 [-c\gamma ( {}^D_J rk_1 c\beta_0 - {}^J_G rk_2 ) + {}^D_J rk_1 c\beta_0 ] \qquad (5.2c)$$

$$T_{0Y} = -2s\gamma s\epsilon_1 [ {}^D_J rk_1 c^2\beta_0 ]$$

und insbesondere für $\gamma_N = \gamma_S = \gamma = 0$:

$$T_{0X} = T_{0Y} \equiv 0$$

$$T_{0Z} = - {}^J_G rk_2 s\beta_0 s\epsilon_1 \qquad (5.2d)$$

Dieser Spezialfall ermöglicht somit die Erzeugung unabhängiger Momente ($T_{0Z}$) um diejenige Bezugsachse ($Z_0$), die über Windmühlenmomente nicht steuerbar ist. Die dafür geltende Beziehung (Gl. 5.2d) zeigt jedoch eine starke Abhängigkeit des Momentenbetrages vom Elevationswinkel der Sonne (e = $\beta_0$). Der diesbezügliche multiplikative Faktor schwankt bei geostationären Satelliten zwischen -0,4 $\leq$ sinus $\beta_0$ $\leq$ + 0,4 und ist daher in den Bereichen höchsten Sonnenstandes über und unter der Äquatorebene (Sommer- und Wintersonnenwende) sehr gut verwendbar, nicht jedoch in den Perioden von Tag- und Nachtgleiche ($\beta_0$ = 0). Diese Schwierigkeit kann aber leicht durch Verstellung der beiden Solargeneratoren um die zweiten Drehachsen 301, 302 um ungleiche Winkel ($\epsilon_N \neq \epsilon_S$) behoben werden, wie die allgemein gültige Gesetzmäßigkeit (Gl. 3.2, $\gamma_N = \gamma_S = \gamma = 0$) für beliebige Werte von $\epsilon_N$, $\epsilon_S$ zeigt:

$$T_{0Z} = -(s\epsilon_N - s\epsilon_S) {}^J_g rk_2 s\beta_0 + (c\epsilon_N - c\epsilon_S)( {}^D_J rk_1 + {}^J_G rk_2 c\beta_0 ) \qquad (5.2e)$$

Auch wenn der erste Beitrag zum Solardruckmoment (wegen $\beta_0$ = 0) verschwindet, so lassen sich durch geeignete Kombinationen, wie z.B.

$\epsilon_N \neq 0, \epsilon_S = 0$

$\epsilon_N = 0, \epsilon_S \neq 0$

Solardruckmomente beliebigen Vorzeichens erzeugen. Da sich die Größe des Momentes wegen der Cosinus-Abhängigkeit in diesem Fall näherungsweise nur von zweiter Ordnung mit dem Verstellwinkel ändert, sind zwar größere Auslenkungen erforderlich, doch ist dies wegen des günstigen Sonnenstandes für die Energieausbeute nicht als kritisch anzusehen.

Diese einfachen Spezialfälle verdeutlichen, daß sich die vorliegende Erfindung grundsätzlich zur Erzeugung gezielter Solardruckmomente um drei Raumachsen einzeln oder in Kombinationen einsetzen läßt. Insbesondere sind für konstante Auslenkungen ($\gamma$, $\epsilon$) der Solargeneratoren aus ihrer Nominalorientierung ($\alpha_0$, $\beta_0$) diese Momente ebenfalls konstant im gewählten - abgesehen von der langsamen Wanderung der Sonneneinfallsebene infolge des Erdumlaufs um die Sonne - "quasi" raumfesten Koordinatensystem. Die einfachen Verhältnisse konstanter Störmomente in diesen Koordinaten, zu deren Kompensation auch einmalige Verstellkommandos für die Solargeneratoren ausreichen würden, sind wegen der eingangs bereits erwähnten, verschiedenartigen Störeinflüsse allerdings in der Praxis kaum anzutreffen. Dies soll nachfolgend am Beispiel typischer Störmomentenverläufe verdeutlicht werden, wie sie durch den Solardruck über Schwerpunktsablagen infolge von Bauunsymmetrien oder missionsbedingter Schwerpunktswanderung entstehen können.

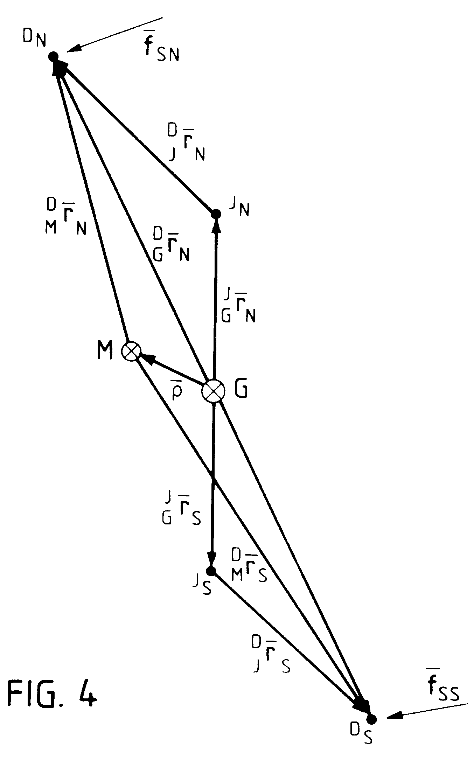

Zur Veranschaulichung der auftretenden Verhältnisse dient die Figur 4, wo das Vektordiagramm der geometrischen Größen ($_G^J \bar{r}$, $_J^D \bar{r}$, $_G^D \bar{r}$) für den nordseitig (Index "N") und südseitig (Index "S") angeordneten Solargeneratorflügel gemäß Figur 3 nochmals dargestellt ist. In diesem Diagramm sind zusätzlich eine Verschiebung des nominalen Schwerpunktes (G) um einen Ablagevektor ($\bar{\rho}$) in eine neue Position (M) sowie die diesen neuen Schwerpunkt mit den Solardruckpunkten ($D_N$, $D_S$) verbindenden Vektoren ($_M^D \bar{r}_N$, $_M^D \bar{r}_S$) eingezeichnet. Dort greifen die resultierenden Solardruckkräfte ($\bar{f}_{SN}$, $\bar{f}_{SS}$) an, die bei Nominalausrichtung der Solargeneratoren in erster Näherung der Flächennormalen entgegengesetzt gerichtet sind, wenn man vom Einfluß der relativ kleinen Regelbewegungen ($\gamma$, $\epsilon$) um die Normalorientierung absieht. Diese Abweichungen liefern zusammen mit den ebenfalls als klein angenommenen Schwerpunktsablagen $|\bar{\rho}|$ nur Größen, die von zweiter Ordnung klein sind. Mit diesen Annahmen und Bezeichnungen lassen sich die durch Schwerpunktsabweichungen vom Strahlungsdruck der Sonne auf die Solargeneratoren hervorgerufenen Störmomente ($M_X$, $M_Y$, $M_Z$) im raumfesten Koordinatensystem ($X_0$, $Y_0$, $Z_0$) wie folgt ausdrücken:

$$\begin{bmatrix} M_X \\ M_Y \\ M_Z \end{bmatrix} = 2(k_1+k_2) \begin{bmatrix} -\rho_X s\alpha_0 s\beta_0 - \rho_Z c\alpha_0 s\beta_0 \\ \rho_X s\alpha_0 c\beta_0 + \rho_Z c\alpha_0 c\beta_0 \\ \rho_X c\alpha_0 s\beta_0 - \rho_Y c\beta_0 - \rho_Z s\alpha_0 s\beta_0 \end{bmatrix}$$

Diese Gesetzmäßigkeiten zeigen, daß sich die Störmomente abhängig von der Achsenrichtung der Schwerpunktsverschiebung ($\rho_X$, $\rho_Y$, $\rho_Z$) im Gegensatz zu den Regelmomenten (Gleichungen 3.1 - 3.3 bzw. die diskutierten Spezialfälle) periodisch mit dem Drehwinkel des Satelliten-Hauptkörpers um seine Bahnnormale ($\alpha_0$) ändern. Lediglich im Fall einer Schwerpunktsverschiebung in Richtung der ersten Drehachsen ($\rho_Y$; $\rho_X = \rho_Z = 0$) genügt eine konstante, gegensinnige Verstellung der Solargeneratoren um ihre Zweiten Drehachsen um den Winkel

$$\epsilon_N = -\epsilon_S = \epsilon_1 = \text{arc sin } \{2 \cdot (1+k_1/k_2) \cdot (\rho_Y/_G^J r) \cdot \text{ctg } \beta_0\} \qquad (6.2)$$

wie sich durch Gleichsetzen der entsprechenden Ausdrücke für das Regelmoment ($T_{0Z}$ nach Gleichung 5.2d) mit dem entsprechenden Term des Störmomentes ($M_Z$ nach Gleichung 6.1) ergibt. Die Kompensation kann also im vorliegenden Fall auf einfache Weise über eine Solargeneratorverstellung um die zweite Drehachse erfolgen, und nicht wie im klassischen Fall nur im Mittel über Windmühlenmomente, deren Wirkungslinie immer um 90° gegenüber dem Störmoment räumlich versetzt ist. Als Anhaltspunkt für die Größe der erforderlichen Solargeneratorverstellung ($\epsilon_N$ = -$\epsilon_S$ = $\epsilon_1$) seien die numerischen Werte eines realen Satelliten, EUTELSAT II, zugrundegelegt. Dafür gelten ungefähr folgende Parameterdaten:

$$P = 4,5 \cdot 10^{-6} \, N/m^2$$
$$C_s = 0,2$$
$$C_d = 0,06$$
$$A = 15 \, m^2$$
$$^J_G r = 2 \, m$$
$$^D_J r = 4,5 m$$

und somit ein erforderlicher Stellwinkel von $\epsilon_1$ = 3,7° pro cm Schwerpunktsverschiebung ($\rho_Y$).

In analoger Weise lassen sich durch Vergleich der physikalischen Gesetzmäßigkeiten bestimmter Störeinflüsse (z.B. Gleichung 6) mit denen der erzeugbaren Stellmomente gemäß der Erfindung (Gl. 3.1 - 3.3) in allgemeiner Darstellung oder daraus abgeleiteten Spezialfällen (z.B. Gl. 5.1 - 5.2) qualitative und quantitative Aussagen über die Struktur der anzuwendenden Regelgesetze und deren Wirksamkeit bzw. Eingriffsempfindlichkeit gewinnen. So wird etwa aus dem vorliegenden Beispiel sofort ersichtlich, daß Störungen infolge Schwerpunktsverschiebung in $Y_0$-Richtung ($\rho_X$ = $\rho_Z$ = 0), wie eingangs schon erwähnt, bei der klassischen Konfiguration ($\beta_0$ = 0) durch Windmühlenmomente überhaupt nicht beeinflußt und solche, die von Schwerpunktsablagen in $X_0$-Richtung herrühren ($\rho_Y$ = $\rho_Z$ = 0), mit Hilfe des erfindungsgemäßen Verfahrens wegen ihrer günstigen Korrelation in zwei Achen ($X_0$, $Y_0$) gleichzeitig kompensiert werden können (vgl. Gl. 6 und 5.1b). Solche Überlegungen sind jedoch jedem Fachmann geläufig und brauchen daher nicht noch eingehender ausgeführt zu werden.

Wegen der ebenfalls bereits erwähnten Vielzahl der Störeinflüsse und ihrer Überlagerung, die letztlich um alle Satellitenachsen konstante Anteile, einfach mit der Umlauffrequenz periodische und höhere Harmonische der Störmomente enthalten, die zudem noch jahreszeitlichen Schwankungen unterworfen sind, ist es in der Praxis jedoch zweckmäßig, den Einsatz der durch die Erfindung gebotenen Eingriffsmöglichkeiten unter Berücksichtigung der spezifischen Randbedingungen zu optimieren. Für jedes Raumfahrzeug, insbesondere für Kommunikations- und Anwendungssatelliten, werden in der Entwicklungsphase unter Berücksichtigung der geometrischer Konfiguration, von Bautoleranzen und Oberflächeneigenschaften, ihres Missionsprofils und ihrer Umgebungsbedingungen Störmomentenrechnungen durchgeführt, die generell als Grundlage für die Auslegung eines Regelungssystems dienen.

Gemäß einer weiteren Ausgestaltung des Erfindungsgedanken wird daher vorgeschlagen, mit Hilfe dem Fachmann bekannter Optimierungsprogramme und mittels elektronischer Rechenanlagen für den jeweiligen Anwendungsfall die günstigste und wirksamste Kombination der verfugbaren Eingriffsmöglichkeiten ($\gamma_N$, $\gamma_S$, $\epsilon_N$, $\epsilon_S$) für die Lageregelung und/oder Störgrößenkompensation unter Verwendung der allgemein gültigen, exakten Gesetzmäßigkeiten (Gl. 3.1 - 3.3) und Berücksichtigung der entsprechenden Randbedingungen zu ermitteln. Unter Randbedingungen sind in diesem Falle nicht nur die Störmomentenprofile für einzelne oder mehrere Satelliten- bzw. Raumachsen zu verstehen, sondern z.B. auch Begrenzungen der Störgrößen, spezifische Eigenschaften des Regelungssystems wie etwa das Vorhandensein von Drallspeichereinrichtungen und andere Stellglieder sowie die verfügbare Lageinformation. Die Vorauskenntnis der Störeinflüsse läßt sich ggf. auch durch Messungen während der präoperationellen Betriebsphase verbessern und zur Nachoptimierung und Parameteranpassung über Bodenkommandos verwenden. Geeignete Optimierungsprogramme sind z.B. beschrieben in "Optimization Theory of Large Systems" von Leon S. Lasdon, McMillan Company etwa Seite 11, Powell's method. In bekannter Weise werden solchen Optimierungsverfahren skalare Kostenfunktionale zu Grunde gelegt, deren Minimum in Abhängigkeit der freien Einstellparameter ($\gamma$, $\epsilon$) ermittelt wird Obwohl die vorliegende Erfindung unter Verwendung von Meßwerten der Satellitenlage, evtl. von Geschwindigkeiten und Zeitfunktionen als Eingangsgrößen für den Regler prinzipiell die direkte Regelung der Satellitenausrichtung bezüglich der missionsbedingter Sollorientierung z.B. zur Erde gestattet, wird die ausschließliche Ausnutzung der Solargeneratorverstellung zur Stellmomentenerzeugung nicht zu einer befriedigenden Lösung der Regelungsaufgabe ausreichen, da u.a. nach Bahnkorrekturmanövern, zu deren Durchführung Reaktionsdüsen mit relativ hohem Schub- und Momentenniveau benötigt werden, erhebliche rotatorische Restgeschwindigkeiten um die einzelnen Satellitenachsen auftreten, zu deren Ausregelung mittels der vergleichsweise schwachen Solardruckmomente unzulässig lange Übergangszeiten bis zum Erreichen der Sollausrichtung erforderlich wären und beim Durchgang durch den Erdschatten solardruckabhängige Momente völlig verschwinden und verbleibende Störeinflüsse und Restgeschwindigkeiten übernaupt nicht mehr ausgeregelt werden könnten.

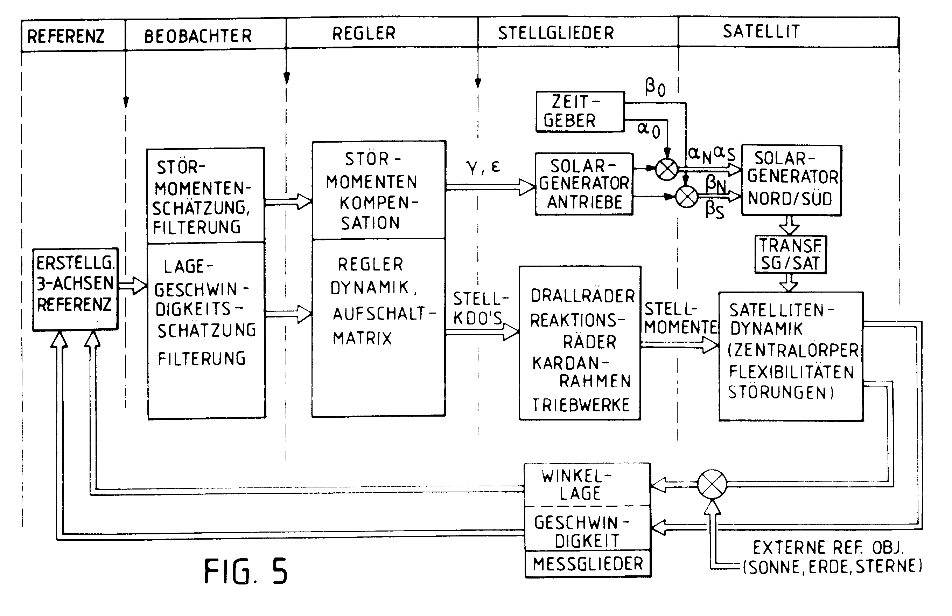

Anhand der schematischen Darstellung des Regelungssystems gemäß Fig. 5 sollen einige Anwendungsbeispiele der vorliegenden Erfindung noch etwas eingehender erläutert werden. Das Blockschaltbild zeigt in allgemeiner Form ein typisches Regelungssystem für Satelliten Die tatsächliche Winkellage um Roll-, Nick- und Gierachse ($\phi$, $\theta$, ggf. $\psi$)) bezüglich externer Referenzobjekte wie Erde, Sonne, Sterne und eventuell auch die Winkelgeschwindigkeit ($\omega_X$, $\epsilon_Y$, $\omega_Z$), je nach Anwendungsfall oder operationeller Betriebsphase, wird durch Meßglieder ermittelt, und durch geeignete Kombination der Meßwerte in einer entsprechenden Elektronik, wie z.B. einem digitalen Bordrechner, wird eine Lagereferenz erstellt. Unter Anwendung von Filter- und Schätzverfahren wird geeignete Information über den augenblicklichen "Systemzustand" des Satelliten gewonnen, der im vorliegenden Fall durch Lage, Geschwindigkeit und Störmomente gekennzeichnet sein soll. Die Abspaltung der Störmomentenanteile in der Beobachter- und Reglerdarstellung von Fig. 5 dient dem Zweck, die Störmomentenkompensation über die Stellantriebe der Solargeneratoren gemäß den eingeführten Beziehungen (Gl. 2.1 - 2.2a, b) zu veranschaulichen. Parallel dazu gehen Stellkommandos aus dem Regler an die klassischen, schnell reagierenden, Stabilität und Lagegenauigkeit sicherstellenden Stellglieder, wie z.B. Drallräder, Kardanrahmen, Reaktionsräder und/oder Reaktionstriebwerke, die je nach anforderungsspezifischer Ausstattung des Regelungssystems vorhanden oder auch, abhängig von der operationellen Betriebsphase, gerade aktiv sind. Es besteht die Möglichkeit der Anbringung einfacher, zusätzlicher, zweiachsiger Sonnensensoren auf den Solargeneratoren, die zur automatischen Nachregelung der Solargenerator-Normalen in die kommandierte Richtung eingesetzt werden können und einen Zeitgeber weitgehend entbehrlich machen. Die Umsetzung der in raumfesten Achsen ($X_0$, $X_0$, $Z_0$) durch die Solargeneratoren erzeugten Solardruckmomente in die Fahrzeugkoordinaten ($X_F$, $X_F$, $Z_F$), in denen üblicherweise die Satellitenorientierung gemessen und die anderweitigen Stellmomente erzeugt werden, ist in Fig. 5 ebenfalls schematisch gezeigt.

Wie bekannt, arbeiten viele derzeit operationelle Nachrichtensatelliten in der Normalbetriebsphase mit Erd-Infrarotsensoren als Meßgliedern zur Ermittlung der Ablage in Rollen und Nicken (Fig. 1), einem fest eingebauten Drallrad zur Erzeugung von Stellmomenten um die Nickachse, Rollmomente erzeugenden Reaktionsdüsen, die gleichzeitig eine Momentenkomponente um die Gierachse aufweisen, sowie weiterer Reaktionsdüsen zur Entladung im Drallrad akkumulierter Nick-Störmomente. Die Lagegenauigkeit um die zur Erde zeigende Gierachse wird bestimmt durch die Drallsteifigkeit und die Größe des um diese Satellitenachse wirkenden Störmomentes. Bei Anwendung der vorliegenden Erfindung läßt sich die bereits erwähnte optimale Regelungsstrategie für die bestmögliche Störmomentenkompensation z.B. sinnvollerweise bestimmen durch die Ermittlung solcher Stellgrößen ($\gamma_N$, $\gamma_S$, $\epsilon_N$, $\epsilon_S$) um die Sollorientierung der Solargeneratoren, die ein Funktional (J) folgender Form zu einem Minimum machen:

$$J = \{g_1(M_Z - T_Z)^2 + g_2 \int_0^{2\pi} (M_Y - T_Y)d(\omega_0 t)\}$$

wobei

$M_Z$, $M_Y$    die Störmomente um die Satellitenachsen ($Z_F$, $Y_F$).

$T_Z$, $T_Y$    die Solardruckmomente (Gl. 3.2, 3.3) und

$g_1$, $g_2$    konstante oder zeitabhängige Gewichtsfaktoren

bedeuten.

Durch die quadratische Abhängigkeit der Kostenfunktion vom Restfehler (Differenz) der Momentenbilanz um die $Z_F$-Achse werden große Abweichungen strenger als kleine bewertet, während für die $Y_F(= Y_0)$-Achse wegen der Drallspeicherfähigkeit die Momentenbilanz nur im Mittel über einen Bahnumlauf ausgeglichen sein muß. Im operationellen Betrieb werden dann die so ermittelten wirksamsten Stellgrößen (und -kombinationen) in Abnängigkeit von den Störmomenten und Ablagen, soweit nicht meßbar über ihre Schatzwerte, angesteuert.

Diese Art von Überlegungen läßt sich auch auf Satelliten mit anderer Ausstattung an Stellgliedern übertragen, je nachdem, ob sie Drallspeicherfähigkeit um die jeweiligen Satellitenachsen aufweisen oder nicht.

Es erübrigt sich darauf hinzuweisen daß sich das Anwendungsspektrum der vorliegenden Erfindung nicht auf die der Erläuterung dienenden Beispiele beschränkt, sondern es sind alle gängigen meßtechnischen Maßnahmen und Schätzverfahren zur Gewinnung bestmöglicher information über die den Satelliten kennzeichnenden Zustandsgrößen und aller regelungstechnischen Möglichkeiten, wie adaptive Regler, Reoptimierung an Bord oder über den Boden, einsetzbar. Darüber hinaus lassen sich die durch die

EP 0 583 307 B1

Erfindung gebotenen Möglichkeiten überall dort anwenden, wo die Voraussetzungen für die Gültigkeit der beschriebenen Zusammenhänge und Gesetrmäßigkeiten gelten. Insbesondere gehorchen aerodynamische Flächenkräfte in dünnen Luftschichten den gleichen Gesetzmäßigkeiten (Gl. 1.1), was z.B. die Anwendung der Erfindung bei Satelliten und anderen Flugobjekten auf niedrigen Erdumlaufbahnen (ca. 150 - 300 km) bzw. bei geostationären Satelliten auf ihrer Transferbahn in der Umgebung des Perigäumsdurchganges unter Ausnutzung der durch Luftmoleküle statt Solardruck erzeugten Kräfte bzw. Momente ermöglicht.

**Patentansprüche**

1. Verfahren zur Lageregelung und Störmomentenkompensation mit Hilfe von Solardruckmomenten für einen auf einer Erdumlaufbahn sich bewegenden Satelliten, der mit zwei symmetrisch an gegenüberliegenden Selten des Satelliten-Hauptkörpers(103) angeordneten Solargeneratoren (104, 105) ausgestattet ist, welche mittels Stellmotoren unabhängig voneinander um jeweils eine erste, bei korrekter Satellitenlage zur Bahnebene orthogonale Drehachse (109, 110) drehbar sind, **dadurch gekennzeichnet**, daß Solardruckmomente ($T_{0X}$, $T_{0Y}$, $T_{0Z}$) wahlweise um mindestens eine von drei orthogonal zueinander orientierten Raumachsen ($X_0$, $Y_0$, $Z_0$) dadurch erzeugt werden, daß die Solargeneratoren (104, 105) in Bezug auf eine Nominalorientierung ($\alpha_0$, $\beta_0$), in der ihre Flächennormalen ($X_{PN}$, $X_{PS}$) exakt zur Sonne hin ausgerichtet sind, durch gezielte Drehung ($\epsilon_N$, $\epsilon_S$; $\gamma_N$, $\gamma_S$) um zweite, zur ersten orthogonale Drehachsen (301, 302) oder um die ersten (109, 110) und die zweiten Drehachsen (301, 302) verstellt werden.

2. Verfahren nach Anspruch 1, **dadurch gekennzeichnet**, daß Solardruckmomente ($T_{0X}$, $T_{0Y}$) um erste und zweite Raumachsen ($X_0$, $Y_0$) erzeugbar sind durch gegensinnige Verstellung ($\gamma_N = -\gamma_S = \gamma_1$) der beiden Solargeneratoren (104, 105) um ihre ersten Drehachsen (109, 110) und gleichsinnige Verstellung ($\epsilon_N = \epsilon_S = \epsilon$) um ihre zweiten Drehachsen (301, 302) gemäß der Vorschrift

$$T_{0X} = 2s\gamma_1 \{ {}^D_J r [k_2 + k_1 s\beta_0 s(\beta_0+\epsilon)] + k_2 {}^J_G rc(\beta_0+\epsilon) \}$$

$$T_{0Y} = -2s\gamma_1 k_1 {}^D_J rc\beta_0 s(\beta_0+\epsilon)$$

wobei c und s den cos bzw. sin, $\beta_0$ den Sonneneinfallswinkel bezüglich der Bahnebene, vom Satelliten aus gesehen, $k_1$ und $k_2$ vom Solardruck sowie von Oberflächeneigenschaften und Geometrie der Solargeneratoren abhängige, in erster Näherung konstante Größen sowie ${}^D_J r$ und ${}^J_G r$ die Abstände vom Solardruckpunkt D eines Solargenerators zum Schnittpunkt J der jeweiligen ersten und zweiten Drehachsen bzw. von letzterem zum Satellitenschwerpunkt G bedeuten.

3. Verfahren nach Anspruch 1, **dadurch gekennzeichnet**, daß Solardruckmomente ($T_{0Z}$) um dritte Raumachsen ($Z_0$) erzeugbar sind durch gegensinnige Verstellung ($\epsilon_N = -\epsilon_S = \epsilon_1$) der beiden Solargeneratoren (104, 105) um ihre zweiten Drehachsen (301, 302) gemäß der Vorschrift

$$T_{0Z} = -s\epsilon_1 k_2 {}^J_G rs\beta_0$$

oder Verstellung nur eines der Solargeneratoren ($\epsilon_N = 0$, $\epsilon_S = 0$ oder $\epsilon_N = 0$, $\epsilon_S = 0$) gemäß der Vorschrift

$$T_{0Z} = -(s\epsilon_N - s\epsilon_S)k_2 {}^J_G rs\beta_0 + (c\epsilon_N - c\epsilon_S)(k_1 {}^D_J r + k_2 {}^J_G rc\beta_0)$$

4. Verfahren nach einem der vorhergehenden Ansprüche, **dadurch gekennzeichnet**, daß die Verstellungen ($\gamma_N$, $\gamma_S$; $\epsilon_N$, $\epsilon_S$) der Solargeneratoren (104, 105) um ihre ersten und zweiten Drehachsen (109, 110; 301, 302) mit Hilfe von Rechnerprogrammen optimierbar sind, die ein Optimierungskriterium zu einem Minimum machen von der Form

$$J = \frac{\text{Minimum}}{(\gamma_N, \gamma_S, \varepsilon_N, \varepsilon_S)} g_2 \int_0^{2\pi} (M_Y - T_Y) d(\omega_0 t)$$

für Satellitenachsen, zu deren Beeinflussung Drallspeicherfähigkeit beinhaltende, zusätzliche Stellglieder einsetzbar sind, und/oder von der Form

$$J = \frac{\text{Minimum}}{(\gamma_N, \gamma_S, \varepsilon_N, \varepsilon_S)} \{g_1 (M_Z - T_Z)^2\}$$

für Satelliten, zu deren Beeinflussung zusätzliche Stellglieder ohne Drallspeicherfähigkeit verfügbar sind, wobei $M_Y$, $M_Z$ vorausberechnete, gemessene und/oder über Schätzalgorithmen gewonnene, um jeweilige Satellitenachsen (Y, Z) wirkende Störmomentenverlaufe, $T_Y$, $T_Z$ über Verstellungen ($\gamma_N$, $\gamma_S$, $\varepsilon_N$, $\varepsilon_S$) der Solargeneratoren um ihre Drehachsen erzeugbare Solardruckmomente und $g_1$, $g_2$ konstante oder zeltabhängige Gewichtsfaktoren bedeuten.

## Claims

1. Process for position control and interference moment compensation with the aid of solar pressure moments for a satellite orbiting the earth, comprising two solar generators (104, 105), which are arranged symmetrically on opposite sides of the satellite's main body (103) and which are rotatable independently from each other around a respective first rotary axis (109, 110), which is orthogonal to the orbit if the satellite is corrected placed, by means of actuators, **characterised in that** solar pressure moments ($T_{0X}$, $T_{0Y}$, $T_{0Z}$) are selectively produced around at least one of three space axes ($X_0$. $Y_0$, $Z_0$) which are orthogonally oriented to each other in that the solar generators (104, 105) are reset relative to a nominal orientation ($\alpha_0$, $\beta_0$) in which their surface normals ($X_{PN}$, $X_{PS}$) are exactly aligned with the sun by aimed rotation ($\varepsilon_N$, $\varepsilon_S$ ; $\gamma_N$, $\gamma_S$) around second rotary axes which are orthogonal with the first (301, 302) or around the first (109, 110) and the second rotary axes (301, 302).

2. Process according to claim 1, **characterised in that** solar pressure moments ($T_{0X}$, $T_{0Y}$) around first and second space axes ($X_0$, $Y_0$) can be produced by counter-directional resetting ($\gamma_N = -\gamma_S = \gamma_1$) of both solar generators (104, 105) around their first rotary axes (109, 110) and equidirectional resetting ($\varepsilon_N = \varepsilon_S = \varepsilon$) around their second rotary axes (301 , 302) according to the instruction

$$TOX = 2s\gamma1 \left\{ {}^D_j r[k2 + k1s\beta0s(\beta0+\varepsilon)] + k2 \, {}^j_G rc(\beta0+\varepsilon) \right\}$$

$$TOY = -2s\gamma1k1 \, {}^D_j rc\beta0s(\beta0+\varepsilon)$$

where c and s is the cos or sin, $\beta_0$ is the incidence angle of the sun relative to the orbital plane, as seen from the satellite, $k_1$ and $k_2$ are values which are dependent on the solar pressure as well as the surface properties and geometry of the solar generators and constant in a first approximation, and ${}^D_j r$ and ${}^J_B r$ are the distances from the solar pressure point D of a solar generator to the inter-section point j of respective first and second rotary axes or from the latter to the satellite's point of gravity G.

3. Process according to claim 1, **characterised in that** solar pressure moments ($T_{0Z}$) around third space axes ($Z_0$) can be produced by counter-positional resetting ($\varepsilon_N = -\varepsilon_S = \varepsilon_1$) of both solar generators (104, 105) around their second rotary axes (301, 302) according to the instruction

$$TOZ = -s\varepsilon1k2 \, {}^J_G rs\beta0$$

or resetting of only one of the solar generators ($\epsilon_N = 0$, $\epsilon_S = 0$ or $\epsilon_N = 0$, $\epsilon_S = 0$) according to the instruction

$$TOZ = -(seN-seS)k2 \; {}^{j}_{G}rs\beta0+(ceN-ceS)(k1 \; {}^{D}_{j}r+k2 \; {}^{j}_{G}rc\beta0)$$

**4.** Process according to one of the above claims, **characterised in that** the resetting ($\gamma_N$, $\gamma_S$ : $\epsilon_{N,\epsilon_S}$) of the solar generators (104, 105) around their first and second rotary axes (109, 110; 301, 302) can be optimized with the aid of computer programs which minimize an optimization criterium of the form

$$J = \begin{array}{c} \text{minimum} \\ (\gamma N, \gamma S, eN, eS) \end{array} g2 \; \int_{0}^{2\pi} (M_\gamma - T_\gamma) d(\omega 0 t)$$

for satellite axes, which are influenced by additional setting elements capable of spin storage, and/or of the form

$$J = \begin{array}{c} \text{minimum} \\ (\gamma N, \gamma S, eN, eS) \end{array} \{g1(M_Z - T_Z)^2\}$$

for satellites which are influenced by available setting elements without spin storage capability, and that $M_Y$, $M_Z$ are interference moment courses, which are pre-calculated, measured and/or obtained via estimated algorithms and which act on respective satellite axes (Y, Z), and $T_\gamma$ and $T_Z$ are solar pressure moments which are generated by resetting ($\gamma_N$, $\gamma_S$, $\epsilon_N$, $\epsilon_S$) the solar generators around their rotary axes, and $g_1$, $g_2$ are constant and time-dependent weight factors.

## Revendications

**1.** Procédé de réglage de position et de compensation des couples perturbateurs à l'aide de couples de pression solaire pour un satellite qui se déplace sur une orbite terrestre et est équipé de deux générateurs solaires (104, 105) qui sont disposés symétriquement sur des faces opposées du corps (103) principal du satellite et, sous l'action de servomoteurs, peuvent pivoter indépendamment l'un de l'autre, chacun autour d'un premier axe de rotation (109, 110) qui est normal au plan de l'orbite lorsque le satellite occupe une position correcte, caractérisé par le fait qu'on produit de manière sélective des couples de pression solaire ($T_{OX}$, $T_{OY}$, $T_{OZ}$) autour d'au moins un axe parmi trois axes ($X_{OX}$, $X_{OY}$, $X_{OZ}$) dans l'espace mutuellement orthogonaux en faisant varier, par une rotation adaptée ($\epsilon_N$, $\epsilon_S$; $\gamma_N$, $\gamma_S$) autour de deuxièmes axes de rotation (301, 302) normaux aux premiers ou autour des premiers (109, 110) et deuxièmes (301, 302) axes de rotation, la position des générateurs solaires (104, 105) par rapport à une orientation de base ($\alpha_0$, $\beta_0$), dans laquelle la normale ($X_{PN}$, $X_{PS}$) à leur surface est dirigée exactement vers le soleil.

**2.** Procédé selon la revendication 1, caractérisé par le fait que l'on produit des couples de pression solaire ($T_{OX}$, $T_{OY}$) autour de premiers et deuxièmes axes de l'espace ($X_{OX}$, $X_{OY}$) par déplacement dans des directions opposées ($\gamma_N = -\gamma_S = \gamma_1$) des deux générateurs solaires (104, 105) autour de leurs premiers axes de rotation (109, 110) et déplacement dans la même direction ($\epsilon_N = \epsilon_S = \epsilon$) autour de leurs deuxièmes axes de rotation (301, 302) conformément à

$$T_{OX} = 2s\gamma_1 \{ {}^{D}_{J}r \; [k_2 + k_1 \; s\beta_0 s \; (\beta_0 + \epsilon)] + k_2 \; {}^{J}_{G}rc(\beta_0+\epsilon)\}$$

$$T_{OX} = 2s\gamma_1 k_1 \; {}^{D}_{J}rc \; \beta_0 s \; (\beta_0+\epsilon)$$

14

e et s étant le cos et le sin, $\beta_0$ l'angle d'incidence du soleil par rapport au plan de l'orbite, vu du satellite, $k_1$ et $k_2$ étant des grandeurs à priori constantes qui dépendent de la pression solaire ainsi que des caractéristiques de surface et de la géométrie des générateurs solaires et $^D_J r$ et $^J_G r$ étant les distances du point de pression solaire D d'un générateur solaire par rapport au point d'intersection des premiers et deuxièmes axes de rotation respectifs ou de ces derniers par rapport centre de gravité G du satellite.

3. Procédé selon la revendication 1, caractérisé par le fait que l'on produit des couples de pression solaire ($T_{OZ}$) autour de troisièmes axes de rotation ($Z_0$) dans l'espace par déplacement dans des directions opposées ($\epsilon_N = -\epsilon_S = \epsilon_1$) des deux générateurs solaires (104, 105) autour de leurs deuxièmes axes de rotation (301, 302) conformément à

$$T_{OZ} = s\epsilon_1 k_2 \, {}^J_G r s \beta_0$$

ou par déplacement de l'un seulement des générateurs solaires ($\epsilon N = 0$, $\epsilon_S = 0$ ou $\epsilon_N = 0$, $\epsilon_S = 0$) conformément à

$$T_{OZ} = -(s\epsilon_N - s\epsilon_S)k_2 \, {}^J_G r s \beta_0 + (c\epsilon_N - c\epsilon_S)(k_1 \, {}^D_J r + k_2 \, {}^J_G r c \beta_0).$$

4. Procédé selon l'une des revendications précédentes, caractérisé par le fait que l'on optimise les déplacements ($\gamma_N$, $\psi_S$; $\epsilon_N$, $\epsilon_S$) des générateurs solaires (104, 105) autour de leurs premiers et deuxièmes axes de rotation 109, 110; 301, 302) au moyen de programmes de calculateurs qui recherchent le minimum d'un critère d'optimisation exprimé sous la forme

$$J = \underset{(\gamma_n, \, \gamma_S, \, \epsilon_N, \, \epsilon_S)}{\text{minimum}} \ g_2 \int_0^{2\pi} (M_\gamma - T_\gamma) \, d \, (\omega_0 t)$$

pour des axes de satellite, sur lesquels on agit en utilisant des servomoteurs supplémentaires à capacité de stockage de moment cinétique. et/ou sous la forme

$$J = \underset{(\gamma_n, \, \gamma_S, \, \epsilon_N, \, \epsilon_S)}{\text{minimum}} \ \{g_1 \ (M_Z - T_Z)^2 \}$$

pour des satellites, sur lesquels on agit en utilisant des servomoteurs supplémentaires sans capacité de stockage de moment cinétique, $M_\gamma$, $M_Z$ étant des couples perturbateurs calculés, mesurés et/ou obtenus par des algorithmes d'estimation qui agissent autour des axes de satellites (Y, Z) correspondants, $T_\gamma$, $T_Z$ étant des couples de pression solaire produits par des déplacements ($\gamma_n$, $\gamma_S$, $\epsilon_N$, $\epsilon_S$) des générateurs solaires autour de leurs axes de rotation et $g_1$, $g_2$ étant des facteurs pondéraux constants ou qui varient en fonction du temps.

FIG. 1

FIG. 2

FIG. 3

FIG. 4

| REFERENZ | BEOBACHTER | REGLER | STELLGLIEDER | SATELLIT |
|---|---|---|---|---|

FIG. 5